# EUROPEAN PATENT APPLICATION

(11) **EP 3 957 602 A2**
(43) Date of publication of application: **23.02.2022**
(21) Application number: 21192066.5
(22) Date of filing: 19.08.2021
(51) Int. Cl.: C01B 32/90, C01B 21/06, C01B 21/076, C01B 32/914, C01B 32/921, C01B 32/949, C08K 3/14

(54) **METHOD FOR THE SYNTHESIS OF MXENES, MXENE NANOSHEETS AND THEIR USE**

(30) Priority: 19.08.2020 EP 20191753
(71) Applicant: Technische Universität Dresden, 01069 Dresden (DE)
(72) Inventor: Feng, Xinliang, 01069 Dresden (DE); Shi, Huanhuan, 01069 Dresden (DE); Shaygan Nia, Ali, 01069 Dresden (DE); Yang, Sheng, 01069 Dresden (DE)
(74) Representative: Kailuweit & Uhlemann Patentanwälte Partnerschaft mbB

(57) **Abstract**

The present invention relates to a method for the synthesis of MXenes comprising the etching of A layers from a MAX phase in non-aqueous solvents comprising iodine, the MXene nanosheets and the use of the MXenes nanosheets in electronic devices, sensors, reinforcement for composites, electrocatalysts or energy storage materials.

## Description

The present invention relates to a method for the synthesis of MXenes comprising the etching in non-aqueous solvents, the MXene nanosheets and the use of the MXenes nanosheets in electronic devices, sensors, reinforcement for composites, electrocatalysts or energy storage materials.

MXenes are a group of transition metal carbides and/or carbonitrides that exhibit superior potential for energy storage. Jun et al. describe energy and environmental applications of MXenes, their fabrication and properties (Jun et al. 2018).

Nam et al. describe functionalized titanium carbide nanorods on Ti₃C₂ nanosheets, prepared via selective etching using LiF in a solution of 9 M HCI, for high capacity anode for lithium-ion batteries (Nam et al. 2019).

Sun et al. disclose double transistion metal MXenes with wide band gaps and their magnetic properties, in particular titanium-vanadium, titanium-chromium and titanium-manganese carbide and nitride based MXenes (Sun et al. 2018).

MXenes are usually prepared by the etching out of the A element layers, in particular Al layers, from MAX phases. Jun et al. describe in particular the production by etching an A layer from a MAX phase of Ti₃AlC₂ using fluoride-based compounds (Jun et al. 2018).

Although MXene nanosheets have attracted significant scientific and industrial attention, these materials are highly susceptible to oxidation, which leads to their chemical degradation and loss of functional properties owing to the contact with water and oxygen.

The methods for synthesis of MXenes rely on the A element etching from MAX phases, which are metallically conductive, layered solids connected by strong metallic, ionic and/or covalent bonds, such as Ti₂AlC, Ti₃AlC₂, and Ta₄AlC₃.

The currently used methods usually require the handling of fluoride-based compounds. Naguib et al. describe the use of hydrofluoric acid (HF) for the etching of Al layers (Naguib et al. 2014). Ghidiu et al. disclose the use of a solution of lithium fluoride and hydrochloric acid for etching of Al layers from titanium aluminium carbide (LiF/HCI) (Ghidiu et al. 2014). Karlsson et al. describe the use of NaHF₂, KHF₂ and NH₄HF₂ for the synthesis of Ti₃C₂TₓIC MXene sheets, wherein Tₓ corresponds to the surface groups and IC to the intercalating compound (Karlsson et al. 2015).

Disadvantageously, the methods rely on the A element etching from MAX phases in water, which results in the oxidation of MXene nanosheets during the etching and the functionalization of MXene surfaces, in particular Ti₃C₂ surfaces, with O-, OH- and fluorine-containing terminations.

Furthermore, the methods produce highly toxic liquid waste.

MXene nanosheets dispersed in water, as well as dried MXenes stored in ambient conditions are susceptible to oxidation, which leads to their chemical degradation and loss of functional properties in a matter of days. Antioxidants such as sodium L-ascorbate and polyanions are used to prevent the oxidation of MXene nanosheets.

Zhao et al. disclose the use of sodium L-ascorbate, ascorbic acid or tannic acid to prevent the oxidation of colloidal and dehydrated Ti₃C₂Tₓ MXene nanosheets for 21 days (Zhao et al. 2019). Zhao et al. assume the protection of the edges of the nanosheets by sodium L-ascorbate from water molecules.

Natu et al. disclose the use of polyanions, such as polyphosphates, polysilicates or polyborates, to slow the oxidation of an aqueous, colloidal Ti₃C₂T_{z} or V₂CT_{z} MXene nanosheet suspension for weeks, in particular three weeks or a month (Natu et al. 2019). Furthermore, the polyphosphate salt worked the best among the three salts.

Using antioxidants, the stability of dispersed MXene nanosheets has an obvious improvement. For example, they have no apparent changes in composition, morphology, electrical conductivity for at least three weeks.

However, the antioxidant does not completely prevent the nanosheets from degradation. Zhao measured an increase in the TiO₂ fraction from 6.1 at-% of Ti₃C₂Tₓ as prepared to 13.1 at-% of Ti₃C₂Tₓ stored for 21 days in a sodium L-ascorbate solution. The electrical conductivity of the MXene film comprising of Ti₃C₂Tₓ nanosheets decreased from 3.2 ± 0.3 10⁵ S/m after preparation to 5.7 ± 0.5 10⁴ S/m after 21 days in a sodium L-ascorbate solution.

One further way to prevent oxidation is to store MXenes in organic solvents. However, the fact that MXenes form less stable suspensions in the latter compared to water is a major drawback.

CN 110 540 236 A describes an MXene material according to formula Mₙ₊₁XₙBr₂ or Mₙ₊₁XₙI₂, a preparation method and application thereof. Furthermore, CN111943207A discloses a method for preparing fluoride-free two-dimensional material MXene according to formula Mₙ₊₁XₙI₂, in particular mixing iodine eutectic and a MAX phase uniformly, transferring into a sealed reaction chamber and heated in an inert environment. Disadvantageously, high temperatures up to 800 °C are necessary. Furthermore, Li et al. describe halogenated MXenes, in particular Ti₃C₂ MXene with unitary, binary and ternary halogen terminals, e. g. -CI, -Br, -I, -Brl and -ClBrI, and their electrochemical activity, such as the electrochemical performance as cathodes for aqueous zinc ion batteries (Li et al. 2020).

The object of the present invention is to provide a method for synthesis of MXenes with an increased stability.

The object has been solved by a method for the synthesis of MXenes comprising the steps
a) etching of A layers from a MAX phase according to formula (I)

   Mₙ₊₁AXₙ (I),

   wherein M is a transition metal,
   wherein A is at least one metal or metalloid selected from the group comprising Al, Si, P, S, Ga, Ge, As, Cd, In, Sn, Sb, Tl, Bi or Pb,
   wherein X is C and/or N, and
   wherein n is 1, 2 or 3,

   with an organic solvent comprising iodine (I₂),
   wherein at least a portion of A is dissolved in the organic solvent,
   wherein dissolved Alₘ (aluminium iodide) and MXene (Mₙ₊₁Xₙ) forms,
   wherein m is 1, 2, 3 or 4;
b) removing the dissolved Alₘ and
c) optionally delamination of the MXene (Mₙ₊₁Xₙ), preferably in a further solvent.

In embodiments, the method for the synthesis of MXenes comprises the steps
a) etching of A layers from a MAX phase according to formula (I)

   Mₙ₊₁AXₙ (I),

   wherein M is a transition metal,
   wherein A is Al, Si, P, S, Ga, Ge, As, Cd, In, Sn, Sb, Tl, Bi or Pb,
   wherein X is C and/or N, and
   wherein n is 1, 2 or 3,

   with I₂ in an organic solvent,
   wherein Alₘ forms and resolves in the organic solvent,
   wherein m is 1, 2, 3 or 4;
b) removing of Alₘ and
c) delamination of the etched MAX phases in a further solvent.

In embodiments, the method according to the invention is carried out in the order of the steps a), b) and c).

Advantageously, the method according to the invention is fluorine-free and does not cause the production of toxic liquid waste. Additionally, the use of I₂ to etch A element layers instead of fluorine-based compounds is much safer.

Further advantageously, the removing of A element layers in the MAX phase is carried out in a non-aqueous solution, in particular in an organic solvent, to avoid the oxidation and thus the degradation of the MXenes caused by water. Thus, the MXene nanosheets obtained by the method according to the invention have a higher quality and higher stability.

Advantageously, there is no iodine left in the final product, in particular in the MXenes.

As used herein, the term "MXene" refers to a group of transition metal carbides, carbonitrides or nitrides.

In embodiments, the MXene is selected from the group comprising Sc₂C, Ti₂C, V₂C, Cr₂C, Zr₂C, Nb₂C, Mo₂C, Hf₂C, Ta₂C, W₂C, (Ti_{0,5}V_{0,5})₂C, (Ti_{0,5}Nb_{0,5})₂C, Mo_{1,33}Y_{0,67}C, Ti₂N, V₂N, Cr₂N, Zr₂N, Mo₂N, Hf₂N, Ti₃C₂, V₃C₂, Zr₃C₂, Hf₃C₂, Ta₃C₂, (Ti,V)₃C₂, (Ti₂Nb)C₂, (Ti₂Ta)C₂, (Ti₂Mn)C₂, (Hf₂V)C₂, (Hf₂Mn)C₂, (V₂Ti)C₂, (Cr₂Ti)C₂, (Cr₂V)C₂, (Cr₂Nb)C₂, (Cr₂Ta)C₂, (Mo₂Sc)C₂, (Mo₂Ti)C₂, (Mo₂Zr)C₂, (Mo₂Hf)C₂, (Mo₂V)C₂, (Mo₂Nb)C₂, (Mo₂Ta)C₂, (W₂Ti)C₂, (W₂Zr)C₂, (W₂Hf)C₂, Ti₃N₂, Ti₃CN, Ti₄C₃, V₄C₃, Cr₄C₃, Nb₄C₃, Mo₄C₃, Ta₄C₃, W₄C₃, (Ti,Nb)₄C₃, (Ti₂Nb₂)C₃, (Ti₂Ta₂)C₃, (V₂Ti₂)C₃, (V₂Nb₂)C₃, (V₂Ta₂)C₃, (Nb,Zr)₄C₃, (Nb₂Ta₂)C₃, (Cr₂Ti₂)C₃, (Cr₂V₂)C₃, (Cr₂Nb₂)C₃, (Cr₂Ta₂)C₃, (Mo₂Ti₂)C₃, (Mo₂Zr₂)C₃, (Mo₂Hf₂)C₃, (Mo₂V₂)C₃, (Mo₂Nb₂)C₃, (Mo₂Ta₂)C₃, (W₂Ti₂)C₃, (W₂Zr₂)C₃, (W₂Hf₂)C₃, and Ti₄N₃.

According to the invention, the MXenes are synthesized by etching of A element layers from a MAX phase according to formula (I) Mₙ₊₁AXₙ (I).

As used herein, the term "MAX phase" refers to a compound with an atomically layered crystal structure, in which Mₙ₊₁Xₙ layers are interleaved by a layer of the A element.

According to the invention, M is a transition metal, preferably an early transition metal, in particular M is selected from the group comprising Sc, Ti, V, Cr, Zr, Nb, Mo, Hf and Ta.

In preferred embodiments, M is selected from the group comprising Ti, V and Mo.

According to the invention, A is a metal or metalloid, in particular A is selected from the group comprising Al, Si, P, S, Ga, Ge, As, Cd, In, Sn, Sb, TI, Bi and Pb.

According to the invention, A is at least one metal or metalloid selected from the group comprising Al, Si, P, S, Ga, Ge, As, Cd, In, Sn, Sb, TI, Bi or Pb. In embodiments, A is one metal or metalloid selected from the group comprising Al, Si, P, S, Ga, Ge, As, Cd, In, Sn, Sb, TI, Bi or Pb.

In preferred embodiments, A is selected from the group comprising Al, Sn, In and Ga, mostly preferred Al.

In preferred embodiments, Alₘ is AlI₃, SnI₂, InI₃ or Gal₂, mostly preferred Alₘ is AlI₃.

In preferred embodiments, the method for the synthesis of MXenes comprises the steps
a) etching of Al layers from a MAX phase according to formula (I)

   Mₙ₊₁AlXₙ (I)

   with an organic solvent comprising iodine (I₂),
   wherein at least a portion of AI is dissolved in the organic solvent,
   wherein dissolved AlI₃ and MXene forms,
      wherein M is a transition metal,
      wherein X is C and/or N, and
      wherein n is 1, 2 or 3;
b) removing the dissolved AlI₃ and
c) optionally delamination of MXene, preferably in a further solvent.

In embodiments, the MAX phase is selected from the group comprising Ti₃AlC₂, Ti₂AlC, V₂AlC, Ti₂AlN, Cr₂AlC, Nb₂AlC, Ta₂AlC, Ti₃AlC₂, V₃AlC₂, Ta₃AlC₂, Ti₄AlN₃, V₄AlC₃, Nb₄AlC₃, Ta₄AlC₃, Ti₂CdC, Sc₂InC, Ti₂GaC, Ti₂InC, Ti₂TlC, V₂GaC, Cr₂GaC, Ti₂GaN, Ti₂InN, V₂GaN, Cr₂GaN, Ti₂GeC, Ti₂SnC, Ti₂PbC, V₂GeC, V₂AsC, Ti₂SC, Zr₂InC, Zr₂TIC, Nb₂GaC, Nb₂InC, Mo₂GaC, Zr₂InN, Zr₂TIN, Zr₂SnC, Zr₂PbC, Nb₂SnC, Nb₂PC, Nb₂AsC, Zr₂SC, Nb₂SC, Hf₂InC, Hf₂TIC, Ta₂GaC, Hf₂SnC, Hf₂PbC, Hf₂SnN, Hf₂SC, Ti₃SiC₂, Ti₃GeC₂, Ti₃SnC₂, Ti₄GaC₃, Ti₄SiC₃ and Ti₄GeC₃.

In preferred embodiments, the MAX phase is selected from the group comprising Ti₃AlC₂, Ti₂AlC, V₂AlC, Ti₂AlN, Cr₂AlC, Nb₂AlC, Ta₂AlC, Ti₃AlC₂, V₃AlC₂, Ta₃AlC₂, Ti₄AlN₃, V₄AlC₃, Nb₄AlC₃, Ta₄AlC₃.

In embodiments, the MAX phase is in the form of a suspension.

In embodiments, the MAX phase is prepared by mixing at least two precursor compounds, preferably in a stoichiometric ratio, and thermal annealing at high temperatures, preferably of at least 1000 °C, more preferably at a temperature in the range of 1,200 °C to 1,400 °C. In embodiments, the thermal annealing is carried out under an inert gas atmosphere, in particular argon atmosphere.

According to the invention, the etching of A layers from a MAX phase is carried out in an organic solvent. Advantageously, no inert gas is required for the etching of A layers from a MAX phase.

As used herein, the term "organic solvent" refers to an organic liquid, which can dissolve other liquid or solid substances by physical means. A requirement for suitability as a solvent is that neither the dissolving nor the dissolved substance is chemically changed during the dissolving process. Advantageously, the organic solvent is water-free and thus, the synthesized MXenes are not oxidized and/or degraded.

In embodiments, the organic solvent is selected from the group comprising nitriles, alcohols, ethers and aromatic hydrocarbons, preferably the group comprising acetonitrile, ethanol, ethyl ether and benzene. Preferably, the organic solvent is anhydrous.

According to the invention, the etching of A layers from a MAX phase is carried out using I₂.

In embodiments, I₂ is applied as a solid, as dispersion or suspension, preferably as a powder.

In embodiments, the etching of A layers from a MAX phase is carried out for a time period in the range of 12 hours to 7 days, preferably 2 days to 4 days.

In embodiments, the etching is carried out at a temperature in the range of 25°C to 200°C, preferably in the range of 50°C to 150°C.

In embodiments, the etching is carried out in a sealed system.

In embodiments, the removal of the dissolved Alₘ is carried out by centrifugation and/or filtration and/or washing.

In further embodiments, the removal of the dissolved Alₘ is carried out by centrifugation and washing or filtration and washing.

In embodiments, the washing is carried out with a solvent, selected from the group comprising an organic solvent and/or water, preferably acetonitrile, alcohols, ethers, such as ethyl ether; and/or water. In further embodiments, the washing is carried out for at least one time, preferably two to five times, especially preferred three times.

In embodiments, after steps a) and b) a delamination of the MXene (Mₙ₊₁Xₙ) is carried out, preferably in a further solvent.

In embodiments, the delamination of the etched MAX phases in a further solvent is carried out using slight shaking or stirring. Advantageously, no sonification is required.

In embodiments, the further solvent is selected from the group comprising an organic solvent and/or water, preferably dimethyl sulfoxide (DMSO), alcohols and/or water.

In embodiments, the delamination of the etched MAX phases in a further solvent is carried out for a time period in the range of 15 minutes to 30 minutes.

In embodiments, the delamination of the etched MAX phases in a further solvent is carried out at a temperature in the range of 0 °C to 35 °C, preferably at room temperature.

In embodiments, the method comprises at least one further step, wherein the at least one further step is selected from filtration, washing, intercalation, drying and/or shaping.

As used herein, the term "intercalation" refers to the introduction of molecules in between the layers of the MXenes. In embodiments, intercalating molecules are selected from dimethyl sulfoxide (DMSO), hydrazine, water and urea.

A further aspect of the present invention is the MXene synthesized by the method according to the invention.

A further aspect of the present invention are the MXene nanosheets according to formula (II)

Mₙ₊₁XₙTₓ (II),

wherein M represents a transition metal element, preferably an early transition metal element, in particular selected from the group comprising Sc, Ti, V, Cr, Zr, Nb, Mo, Hf and Ta, preferably Ti, V or Nb;
wherein X is C and/or N,
wherein T is at least one terminal group selected from O and OH,
wherein n is 1, 2 or 3, and
wherein x is the number of terminal groups;
wherein the MXene nanosheets comprise a two-dimensional (2D) layer structure.

According to the invention, the MXene nanosheets are free of halogens, including fluorine. The composition of the MXene nanosheets can be measured by Energy-dispersive X-ray spectroscopy (EDS) or X-ray photoelectron spectroscopy (XPS).

In embodiments, the weight ratio of oxygen to fluorine is at least 200, preferably at least 1,000, more preferably at least 2,000.

Advantageously, the MXene nanosheets according to the invention are stable as an aqueous dispersion for at least two weeks at room temperature. The stability can be determined optically, in particular by microscopy, preferably by atomic force microscopy (AFM); or with nuclear magnetic resonance spectroscopy (NMR).

The morphology of the MXene nanosheets according the invention can be measured by scanning electron microscopy (SEM) or transmission electron microscopy (TEM), and the structure can be measured by high resolution (HR)-TEM.

In embodiments, the MXene nanosheets have an amount of oxidation groups (O and OH) of at least 20 wt% (oxygen in relation to the sum of all elements). In comparison, the MXene nanosheets according to the state of the art have an amount of oxidation groups (O and OH) of about 10 wt% (Alhabeb et al. 2017).

In embodiments, the MXene is selected from M₂X, M₃X₂ and M₄X₃, wherein M is a transition metal and wherein X is C and/or N.

In further embodiments, the MXene is a double transition metal MXene according to formula (IIa) or formula (IIb)

M'₂M"X₂ (IIa) or M'₂M"₂X₃ (IIb)

, wherein M' and M" are different transition metals and wherein X is C and/or N.

In preferred embodiments, the MXene is selected from the group comprising Sc₂C, Ti₂C, V₂C, Cr₂C, Zr₂C, Nb₂C, Mo₂C, Hf₂C, Ta₂C, W₂C, (Ti_{0,5}V_{0,5})₂C, (Ti_{0,5}Nb_{0,5})₂C, Mo_{1,33}Y_{0,67}C, Ti₂N, V₂N, Cr₂N, Zr₂N, Mo₂N, Hf₂N, Ti₃C₂, V₃C₂, Zr₃C₂, Hf₃C₂, Ta₃C₂, (Ti,V)₃C₂, (Ti₂Nb)C₂, (Ti₂Ta)C₂, (Ti₂Mn)C₂, (Hf₂V)C₂, (Hf₂Mn)C₂, (V₂Ti)C₂, (Cr₂Ti)C₂, (Cr₂V)C₂, (Cr₂Nb)C₂, (Cr₂Ta)C₂, (Mo₂Sc)C₂, (Mo₂Ti)C₂, (Mo₂Zr)C₂, (Mo₂Hf)C₂, (Mo₂V)C₂, (Mo₂Nb)C₂, (Mo₂Ta)C₂, (W₂Ti)C₂, (W₂Zr)C₂, (W₂Hf)C₂, Ti₃N₂, Ti₃CN, Ti₄C₃, V₄C₃, Cr₄C₃, Nb₄C₃, Mo₄C₃, Ta₄C₃, W₄C₃, (Ti,Nb)₄C₃, (Ti₂Nb₂)C₃, (Ti₂Ta₂)C₃, (V₂Ti₂)C₃, (V₂Nb₂)C₃, (V₂Ta₂)C₃, (Nb,Zr)₄C₃, (Nb₂Ta₂)C₃, (Cr₂Ti₂)C₃, (Cr₂V₂)C₃, (Cr₂Nb₂)C₃, (Cr₂Ta₂)C₃, (Mo₂Ti₂)C₃, (Mo₂Zr₂)C₃, (Mo₂Hf₂)C₃, (Mo₂V₂)C₃, (Mo₂Nb₂)C₃, (Mo₂Ta₂)C₃, (W₂Ti₂)C₃, (W₂Zr₂)C₃, (W₂Hf₂)C₃, and Ti₄N₃.

In embodiments, the MXene nanosheets are in the form of a monolayer or a multilayer.

In embodiments, the thickness of the MXene nanosheets is in the range of the thickness of one monolayer to several layers, preferably in the range of the thickness of one monolayer to five layers.

In further embodiments, the thickness of the MXene nanosheets is in the range of 1 nm to 50 nm, preferably in the range of 1 nm to 5 nm. Advantageously, the film thickness of the MXene nanosheets synthesized with the method according to the invention is adjustable by the delamination conditions, in particular by the use of centrifugation.

The thickness can be determined by atomic force microscopy (AFM) or transmission electron microscopy (TEM).

In embodiments, the MXene nanosheets according to the invention have an average size, in particular at least one side with a length, in the range of 0.1 µm to 2 µm, preferably in the range of 0.5 µm to 1.9 µm. Advantageously, the MXene nanosheets according to the invention are larger than MXenes synthesized so far.

The average size can be determined by AFM, TEM and SEM.

In embodiments, the MXene nanosheets according to the invention have a conductivity in the range of 1,000 S/cm to 1,500 S/cm. Advantageously, the conductivity is comparable with MXenes synthesized by different methods.

The conductivity of the MXenes can be measured with four point probe or four-terminal sensing, respectively. The term "four point probe" or "four-terminal sensing" refers to an electrical impedance measuring technique that uses separate pairs of current-carrying and voltage-sensing electrodes for the precise measurement of low resistance values.

In embodiments, the MXene nanosheets according to the invention are in the form of a colloidal solution, preferably in the form of an aqueous colloidal solution.

As used herein, the term "colloidal solution" refers to a mixture in which one substance of microscopically dispersed insoluble or soluble particles, in particular the MXene nanosheets, is suspended throughout another substance, in particular an aqueous solution.

Another aspect of the invention is the use of the MXene nanosheets according to the invention or synthesized with the method according to the invention in electronic devices, sensors, reinforcement for composites, electrocatalysts or energy storage materials.

In embodiments, the MXene nanosheets are used in supercapacitors.

As used herein, the term "supercapacitor" refers to a high-capacity capacitor with a lower voltage limit than a capacitor.

In further embodiments, the recently described embodiments can be combined; in particular, the characteristics of the method according to the invention can be applied to the MXene nanosheets and the use of the MXene nanosheets according to the invention. Furthermore, the characteristics of the MXene nanosheets according to the invention can be applied to the method according to the invention. Various changes and modifications within the spirit and scope of the disclosed invention will become readily apparent to those skilled in the art from reading the description and the other parts of the present disclosure.

This project has received funding from the European Union's Horizon 2020 research and innovation programme under grant agreement Graphene FPA 649953.

The present invention will now be further explained by the following non-limiting figures and examples.

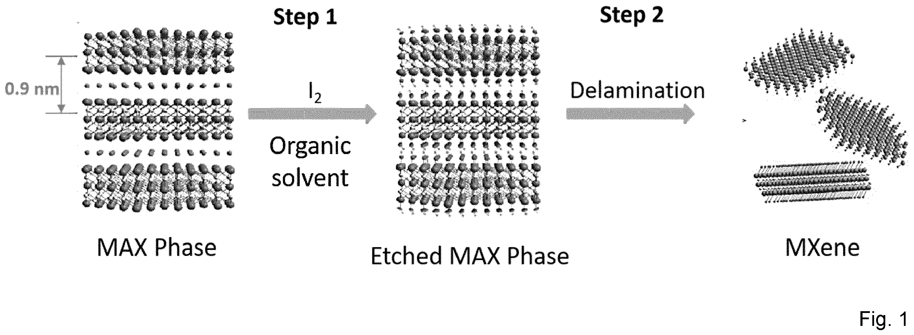

**Fig. 1** shows a schematic of the method according to the invention using bulk MAX Phase (e.g. Ti₃AlC₂) for the synthesis of MXene nanosheets (e.g. Ti₃C₂Tₓ).
**Fig. 2** shows A) an atomic force microscopy (AFM) image of Ti₃C₂Tₓ nanosheets according to the invention, and B) the by AFM determined thickness of the nanosheets.
**Fig. 3** shows XPS measurements of Ti₃C₂Tₓ nanosheets according to the invention: A) XPS survey spectrum of Ti₃C₂Tₓ powder. B) High resolution XPS spectrum of Ti 2p. C) High resolution XPS spectrum of C 1s. D) High resolution XPS spectrum of O 1s.
**Fig. 4** shows A) transmission electron microscopy (TEM) image of Ti₃C₂Tₓ nanosheets and B) high-resolution TEM (HRTEM) of Ti₃C₂Tₓ nanosheets.
**Fig. 5** shows SEM images of Ti₃C₂Tₓ nanosheets produced by etching with HF (A, B, C) and produced by etching with I₂ (D, E, F): after synthesis (A, D), after 4 days in water (B), after 7 days in water (C, E) and after 14 days in water (F).

### Synthesis of the Ti₃C₂Tₓ nanosheets

The precursor Ti₃AlC₂ and I₂ powder (molar ratio = 1:1) were immersed and stirred in anhydrous acetonitrile (CH₃CN). The reaction was carried out at 100 °C for 4 days in a sealed atmosphere, wherein AlI₃ formed. After centrifugation and washing with anhydrous acetonitrile for three times to remove AlI₃, the precipitation was added into DMSO/water for delamination with slightly shaking for 15 minutes.

### Characterization of the Ti₃C₂Tₓ nanosheets

For structural characterizations, the Ti₃C₂Tₓ nanosheets were transferred onto 300 nm SiO₂/Si substrates atomic force microscopy (AFM). AFM was performed in a tapping mode in air on a customized Ntegra Aura/Spectra from NT-MDT (Moscow, Russia) with a SMENA head operated in contact mode.

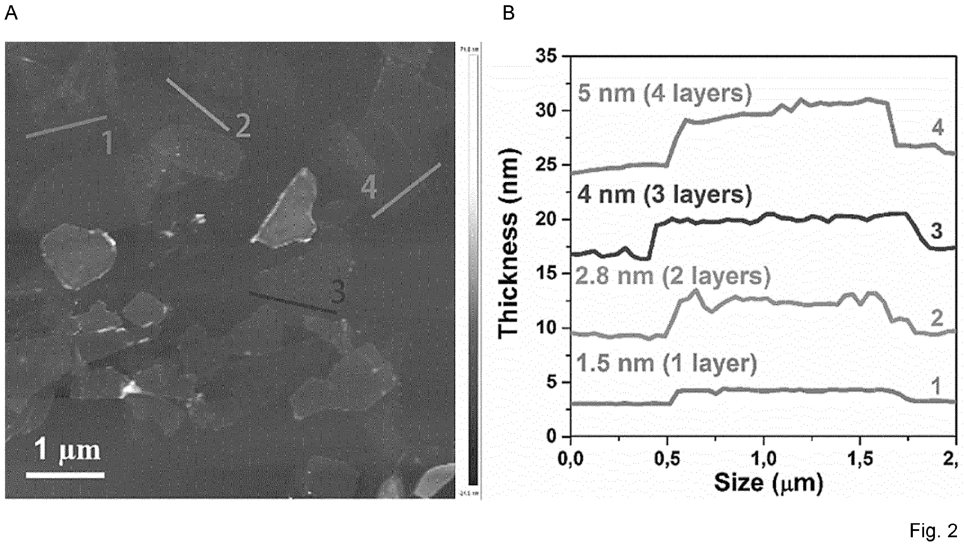

AFM measurements on the SiO₂/Si wafer show a film thickness of about 5 nm to 30 nm, corresponding to about 1 to 5 layers (see **Fig. 2****).** Furthermore, AFM measurements disclose a content of 71% of the Ti₃C₂Tₓ nanosheets to have 1 to 5 layers. The average size of the Ti₃C₂Tₓ nanosheets is 1.8 µm.

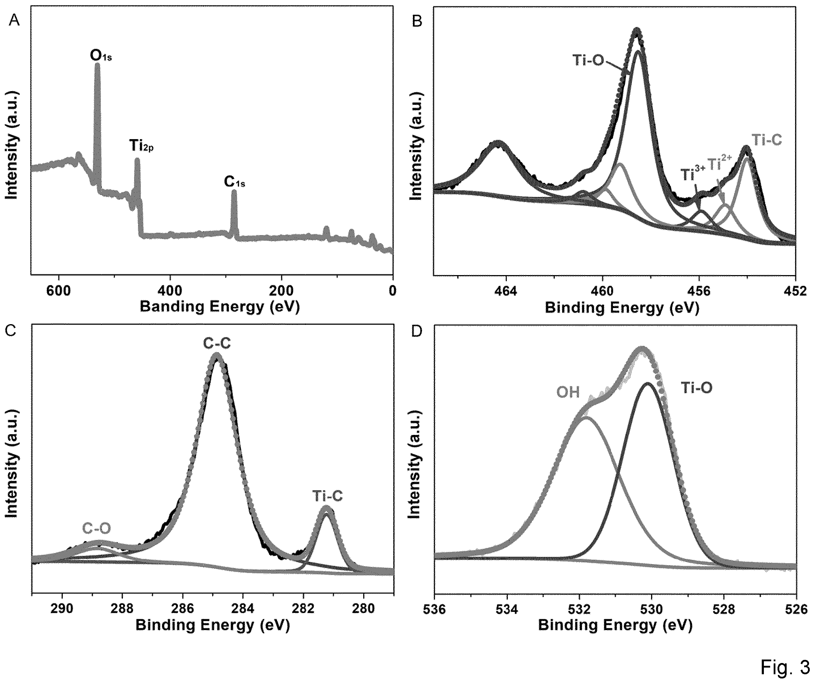

For XPS measurements, a powder of Ti₃C₂Tₓ was used (see **Fig. 3****).** The survey spectrum shows three major bands including O 1s, Ti 2p and C 1s. The Al peak is not observed due to complete etching. Moreover, there is no iodine left in the final product. High-resolution C 1s, O 1s and Ti 2p bands confirm the presence of C-O, Ti-O and OH bonds from the surface groups. These results confirm that Tₓ is O and OH.

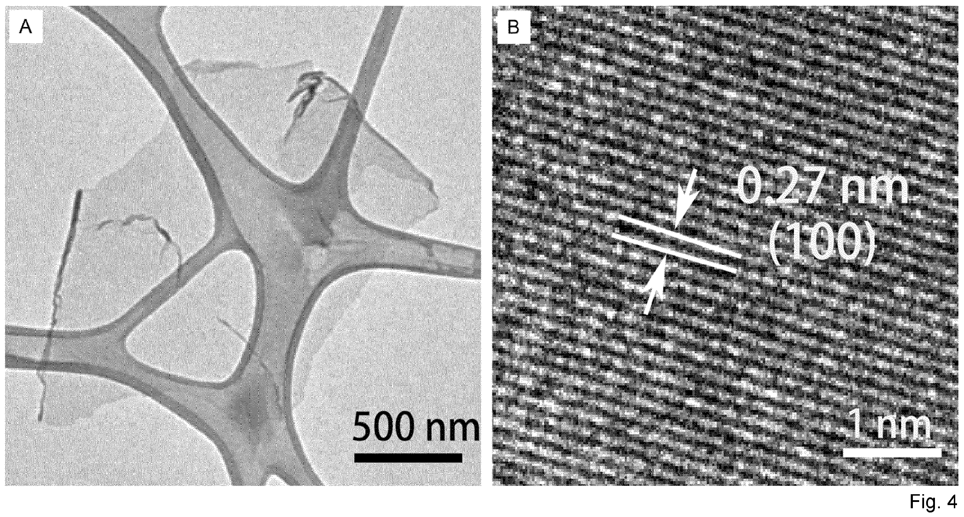

For TEM, the measurements was performed on TEM grids. The TEM image confirms the thin and flexible features of the MXene nanosheets. HR-TEM images (see **Fig. 4****)** demonstrate an orthogonally symmetric structure of defect-free crystal lattice, reflecting the advantages of etching in organic solvents.

### Stability of the Ti₃C₂Tₓ nanosheets

Aliquots were taken from an aqueous dispersion of Ti₃C₂Tₓ nanosheets after different time intervals (0 days, 4 days, 7 days and 14 days). Afterwards, SEM samples were prepared and measured from each aliquots.

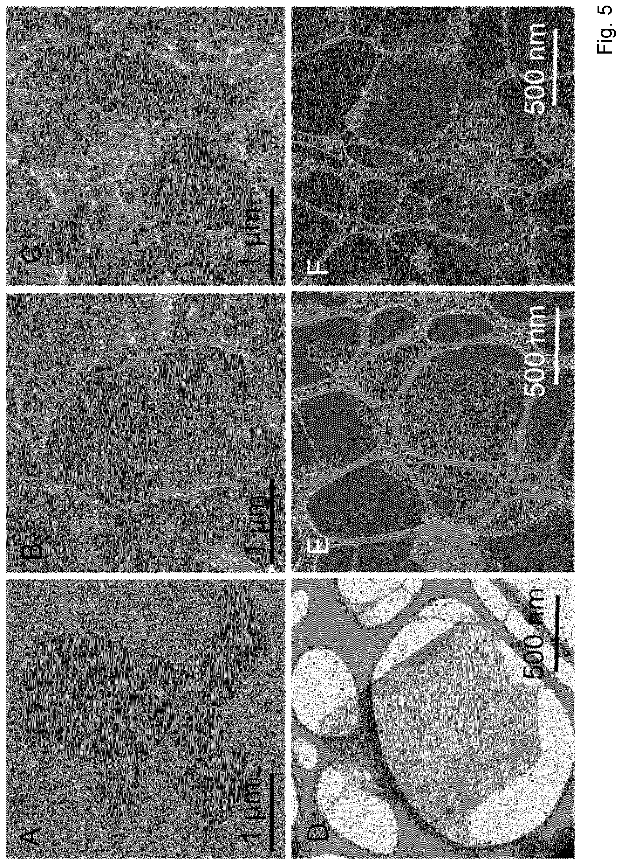

MXenes produced by HF easily oxidized to TiO₂ in water, but MXenes produced by I₂ are stable in water for at least 2 weeks (see **Fig. 5****).**

### Cited non-patent literature

Alhabeb M, Maleski K, Anasori B, Lelyukh P, Clark L, Sin S, Gogotsi Y (2017) Guidelines for Synthesis and Processing of Two-Dimensional Titanium Carbide (Ti3C2Tx MXene). Chem. Mater. 29, 18, 7633-7644.
Ghidiu M, Lukatskaya MR, Zhao M-Q, Gogotsi Y, Barsoum MW (2014) Conductive two-dimensional titanium carbide 'clay' with high volumetric capacitance. Nature 516, 78-81.
Jun B-M, Kim S, Heo J, Park CM, Her N, Jang M, Huang Y, Han J, Yoon Y (2018) Review of MXenes as new nanomaterials for energy storage/delivery and selected environmental applications. Nano Research 12 (3), 471-487.
Karlsson LH, Birch J, Halim J, Barsoum MW, Persson POA (2015) Atomically resolved structural and chemical investigation of single MXene sheets. Nano Lett. 15, 4955-4960.
Li M, Li XL, Qin G, Luo K, Lu J, Li Y, Liang G, Huang Z, Hultman L, Eklund P, Persson POA, Du S, Chai Z, Zhi C, Huang Q (2020) Halogenated MXenes with Electrochemically Active Terminals for High Performance Zinc Ion Batteries. ARXIV.ORG, Cornell University Library, 201.
Naguib M, Mochalin VN, Barsoum MW, Gogotsi Y (2014) MXenes: a new family of two-dimensional materials. Adv. Mater. 26, 992-1005.
Nam S, Umrao S, Oh S, Shin KH, Park HS, Oh I-K (2020) Sonochemical self-growth of functionalized titanium carbide nanorods on TiSC2 nanosheets for high capacity anode for lithium-ion batteries. Composites: Part B 181, DOI: 10.1016/J.COMPOSITESB.2019.107583.
Natu V, Hart JL, Sokol M, Chiang H, Taheri ML, Barsoum MW (2019) Edge Capping of 2D-MXene Sheets with Polyanionic Salts to Mitigate Oxidation in Aqueous Colloidal Suspensions. Angew. Chem. Int. Ed. 58, 12785-12790.
Sun W, Xie Y, Kent PRC (2018) Double transition metal MXenes with wide band gaps and novel magnetic properties. Nanoscale 10 (25) 11962-11968.
Zhao X, Vashisth A, Prehn E, Sun W, Shah SA, Habib T, Chen Y, Tan Z, Lutkenhaus JL, Radovic M, Green MJ (2019) Antioxidants Unlock Shelf-Stable Ti3C2Tx (MXene) Nanosheet Dispersions. Matter 1, 513-526.

## Claims

1. A method for the synthesis of MXenes comprising the steps
a) etching of A layers from a MAX phase according to formula (I)
Mₙ₊₁AXₙ (I)
wherein M is a transition metal,
wherein A is at least one metal or metalloid selected from the group comprising Al, Si, P, S, Ga, Ge, As, Cd, In, Sn, Sb, Tl, Bi or Pb,
wherein X is C and/or N, and
wherein n is 1, 2 or 3,
with an organic solvent comprising iodine,
wherein at least a portion of A is dissolved in the organic solvent,
wherein dissolved Alₘ and MXene forms, wherein m is 1,2, 3, 4; and
b) removing the dissolved Alₘ.

2. The method according to claim 1, wherein MXene is selected from Sc₂C, Ti₂C, V₂C, Cr₂C, Zr₂C, Nb₂C, Mo₂C, Hf₂C, Ta₂C, W₂C, (Ti_{0,5}V_{0,5})₂C, (Ti_{0,5}Nb_{0,5})₂C, Mo_{1,33}Y_{0,67}C, Ti₂N, V₂N, Cr₂N, Zr₂N, Mo₂N, Hf₂N, Ti₃C₂, V₃C₂, Zr₃C₂, Hf₃C₂, Ta₃C₂, (Ti,V)₃C₂, (Ti₂Nb)C₂, (Ti₂Ta)C₂, (Ti₂Mn)C₂, (Hf₂V)C₂, (Hf₂Mn)C₂, (V₂Ti)C₂, (Cr₂Ti)C₂, (Cr₂V)C₂, (Cr₂Nb)C₂, (Cr₂Ta)C₂, (Mo₂Sc)C₂, (Mo₂Ti)C₂, (Mo₂Zr)C₂, (Mo₂Hf)C₂, (Mo₂V)C₂, (Mo₂Nb)C₂, (Mo₂Ta)C₂, (W₂Ti)C₂, (W₂Zr)C₂, (W₂Hf)C₂, Ti₃N₂, Ti₃CN, Ti₄C₃, V₄C₃, Cr₄C₃, Nb₄C₃, Mo₄C₃, Ta₄C₃, W₄C₃, (Ti,Nb)₄C₃, (Ti₂Nb₂)C₃, (Ti₂Ta₂)C₃, (V₂Ti₂)C₃, (V₂Nb₂)C₃, (V₂Ta₂)C₃, (Nb,Zr)₄C₃, (Nb₂Ta₂)C₃, (Cr₂Ti₂)C₃, (Cr₂V₂)C₃, (Cr₂Nb₂)C₃, (Cr₂Ta₂)C₃, (Mo₂Ti₂)C₃, (Mo₂Zr₂)C₃, (Mo₂Hf₂)C₃, (Mo₂V₂)C₃, (Mo₂Nb₂)C₃, (Mo₂Ta₂)C₃, (W₂Ti₂)C₃, (W₂Zr₂)C₃, (W₂Hf₂)C₃, and Ti₄N₃.

3. The method according to claims 1 or 2, wherein the MAX phase is selected from the group comprising Ti₃AlC₂, Ti₂AlC, V₂AlC, Ti₂AlN, Cr₂AlC, Nb₂AlC, Ta₂AlC, Ti₃AlC₂, V₃AlC₂, Ta₃AlC₂, Ti₄AlN₃, V₄AlC₃, Nb₄AlC₃, Ta₄AlC₃, Ti₂CdC, Sc₂InC, Ti₂GaC, Ti₂InC, Ti₂TlC, V₂GaC, Cr₂GaC, Ti₂GaN, Ti₂InN, V₂GaN, Cr₂GaN, Ti₂GeC, Ti₂SnC, Ti₂PbC, V₂GeC, V₂AsC, Ti₂SC, Zr₂InC, Zr₂TlC, Nb₂GaC, Nb₂InC, Mo₂GaC, Zr₂InN, Zr₂TlN, Zr₂SnC, Zr₂PbC, Nb₂SnC, Nb₂PC, Nb₂AsC, Zr₂SC, Nb₂SC, Hf₂InC, Hf₂TlC, Ta₂GaC, Hf₂SnC, Hf₂PbC, Hf₂SnN, Hf₂SC, Ti₃SiC₂, Ti₃GeC₂, Ti₃SnC₂, Ti₄GaC₃, Ti₄SiC₃, Ti₄GeC₃.

4. The method according to one of the claims 1 to 3, wherein the MAX phase is in the form of a suspension.

5. The method according to one of the claims 1 to 4, wherein the organic solvent is selected from the group comprising acetonitrile, ethanol and benzene.

6. MXene nanosheets according to formula (II)
Mₙ₊₁XₙTₓ (II),
wherein M represents a transition metal element;
wherein X is C and/or N,
wherein T is at least one terminal group selected from O and OH,
wherein n is 1, 2 or 3, and
wherein x is the number of terminal groups;
wherein the MXene nanosheets comprise a two-dimensional (2D) layer structure.

7. The MXene nanosheets according to claim 6, wherein the MXene is selected from M₂X, M₃X and M₄X₃, wherein M is a transition metal and wherein X is C and/or N.

8. The MXene nanosheets according to claim 6, wherein MXene is a double transition metal MXenes according to formula (IIa) or formula (IIb)
M'₂M"X₂ (IIa) or M'₂M"₂X₃ (IIb),
wherein M' and M" are different transition metals and wherein X is C and/or N.

9. The MXene nanosheets according to one of the claims 6 to 8, wherein the MXene is selected from the group comprising Sc₂C, Ti₂C, V₂C, Cr₂C, Zr₂C, Nb₂C, Mo₂C, Hf₂C, Ta₂C, W₂C, (Ti_{0,5}V_{0,5})₂C, (Ti_{0,5}Nb_{0,5})₂C, Mo_{1,33}Y_{0,67}C, Ti₂N, V₂N, Cr₂N, Zr₂N, Mo₂N, Hf₂N, Ti₃C₂, V₃C₂, Zr₃C₂, Hf₃C₂, Ta₃C₂, (Ti,V)₃C₂, (Ti₂Nb)C₂, (Ti₂Ta)C₂, (Ti₂Mn)C₂, (Hf₂V)C₂, (Hf₂Mn)C₂, (V₂Ti)C₂, (Cr₂Ti)C₂, (Cr₂V)C₂, (Cr₂Nb)C₂, (Cr₂Ta)C₂, (Mo₂Sc)C₂, (Mo₂Ti)C₂, (Mo₂Zr)C₂, (Mo₂Hf)C₂, (Mo₂V)C₂, (Mo₂Nb)C₂, (Mo₂Ta)C₂, (W₂Ti)C₂, (W₂Zr)C₂, (W₂Hf)C₂, Ti₃N₂, Ti₃CN, Ti₄C₃, V₄C₃, Cr₄C₃, Nb₄C₃, Mo₄C₃, Ta₄C₃, W₄C₃, (Ti,Nb)₄C₃, (Ti₂Nb₂)C₃, (Ti₂Ta₂)C₃, (V₂Ti₂)C₃, (V₂Nb₂)C₃, (V₂Ta₂)C₃, (Nb,Zr)₄C₃, (Nb₂Ta₂)C₃, (Cr₂Ti₂)C₃, (Cr₂V₂)C₃, (Cr₂Nb₂)C₃, (Cr₂Ta₂)C₃, (Mo₂Ti₂)C₃, (Mo₂Zr₂)C₃, (Mo₂Hf₂)C₃, (Mo₂V₂)C₃, (Mo₂Nb₂)C₃, (Mo₂Ta₂)C₃, (W₂Ti₂)C₃, (W₂Zr₂)C₃, (W₂Hf₂)C₃, and Ti₄N₃.

10. The MXene nanosheets according to one of the claims 6 to 9 in the form of a monolayer or a multilayer.

11. The MXene nanosheets according to one of the claims 6 to 10, wherein the average size of at least one side of MXene nanosheets determined by AFM, TEM or SEM is in the range 0.1 µm to 2 µm.

12. The MXene nanosheets according to one of the claims 6 to 11, wherein the conductivity is in the range of 1,000 S/cm to 1,500 S/cm.

13. Use of the MXene nanosheets according to one of the claims 6 to 12 or synthesized with the method according to one of the claims 1 to 5 in electronic devices, sensors, reinforcement for composites, electrocatalysts or energy storage materials.

14. The use of the MXene nanosheets according to claim 13 in supercapacitors.
